# EUROPÄISCHE PATENTANMELDUNG

(11) **EP 1 027 933 A1**
(43) Veröffentlichungstag der Anmeldung: **16.08.2000**
(21) Anmeldenummer: 99810109.1
(22) Anmeldetag: 10.02.1999
(51) Int. Cl.: B01L 9/06, G01N 1/24, B01L 9/00, B01L 3/00, B01D 1/00, B01D 3/10

(54) **Vorrichtung und Verfahren zum Bearbeiten von Proben**

(71) Anmelder: Büchi Labortechnik AG, CH-9230 Flawil (CH)
(72) Erfinder: Freydl, Ernst, 9011 St. Gallen (CH); Tauer, Andreas, 8049 Zürich (CH); Ziolko, Thomas, 9325 Roggwil (CH)
(74) Vertreter: Hepp, Dieter

(57) **Zusammenfassung**

Ein Vortexverdampfer (1) weist ein Rack (2) zur Aufnahme von mehreren Probegefässen (20) mit Proben auf. Das Rack (2) ist bewegbar und heizbar. Der Verdampfer weist Verbindungsmittel (6, 7, 8) auf, welche die Probegefässe (20) einzeln oder in Gruppen gasdicht mit einer Vakuumpumpe verbinden.

## Beschreibung

Die Erfindung betrifft eine Vorrichtung und ein Verfahren zum Bearbeiten, insbesondere zum Verdampfen von Proben gemäss dem Oberbegriff der unabhängigen Patentansprüche.

Zum Verdampfen von in Probegefässen gehaltenen, gelösten Proben ist es bekannt, die Probe im Gefäss zu erhitzen. Zum Heruntersetzen des Siedepunktes des Lösungsmittels ist es bekannt, in dem Probegefäss ein Vakuum zu erzeugen. Damit ist Verdampfung bei niedrigeren Temperaturen möglich.

Ausserdem ist es bekannt, die Probegefässe zu bewegen, um in der gelösten Probe Wirbel zu erzeugen. Die Verdampfungsrate des Lösungsmittels wird dadurch erhöht.

Es ist wünschenswert, in einem Verdampfungsgefäss gleichzeitig mehrere unterschiedliche Proben bearbeiten zu können.

Aus der CH 688 987 ist beispielsweise eine Reaktionskammer bekannt, in welche mehrere Probegefässe gleichzeitig hineingestellt werden können. Die Reaktionskammer kann unter Vakuum gesetzt werden. Die Probegefässe werden in ein bewegbares Rack gesetzt, welches über eine Magnetkupplung von aussen her antreibbar ist.

Diese Vorrichtung ist aber mit dem Nachteil behaftet, dass komplizierte Mechanismen zum Antreiben und Erhitzen der in der geschlossenen Kammer gehaltenen Probegefässe vorgesehen werden müssen.

Aus der US 5 569 357 ist ebenfalls ein Verdampfer bekannt, bei welchem in den Probelösungen Wirbel erzeugt werden. Auch in dieser Vorrichtung sind mehrere Probegefässe in einem gemeinsamen Raum angeordnet.

Bei allen diesen bekannten Vorrichtungen besteht das Problem, dass sich die Proben in einzelnen Probegefässen (welche unterschiedlicher Natur sein können) über die Gasphase vermischen können. Die Reinheit des Endproduktes ist damit nicht mehr gewährleistet.

Es ist deshalb eine Aufgabe der vorliegenden Erfindung, die Nachteile des Bekannten zu vermeiden, insbesondere eine Vorrichtung und ein Verfahren zum Bearbeiten, insbesondere Verdampfen von Proben zu schaffen, welche auf einfache Weise die Bearbeitung, insbesondere Verdampfung mehrerer in verschiedenen Probegefässen enthaltenen Proben erlaubt. Das Verfahren und die Vorrichtung sollen eine Vermischung der Proben über die Gasphase wirksam verhindern, sollen einfach herstellbar und betreibbar sein und sollen auf einfache Weise unterschiedlichen Erfordernissen anpassbar sein.

Erfindungsgemäss werden diese Aufgaben mit einer Vorrichtung und mit einem Verfahren gemäss den Merkmalen des kennzeichnenden Teils der unabhängigen Patentansprüche gelöst.

Die Vorrichtung mit den Merkmalen der Erfindung dient zum Bearbeiten von Proben, welche in Probegefässen enthalten sind. Die Probegefässe weisen wenigstens eine Einfüllöffnung auf, durch welche die Probe in das Probegefäss eingegeben werden kann. Insbesondere dient die Vorrichtung zum Verdampfen der Proben.

Die Vorrichtung weist Haltemittel zum gleichzeitigen Halten von mehreren Probegefässen auf. Die Haltemittel sind typischerweise als Rack ausgebildet. Die üblicherweise etwa zylindrischen Probegefässen (unten geschlossene Röhrchen) werden in das Rack gestellt.

Die Vorrichtung weist ausserdem optionale Heizmittel zum Erwärmen der in den Probegefässen enthaltenen Probe auf. Die Heizmittel bestehen typischerweise aus einer normalen Heizplatte. Bei bestimmten Lösungsmittel mit niedrigem Siedepunkt ist eine Heizung nicht notwendig. Verdampfung erfolgt alleine aufgrund des Unterdrucks.

Die Vorrichtung ist ausserdem mit Mitteln zum Erzeugen eines Unterdrucks versehen. Grundsätzlich sind alle Mittel geeignet, welche einen ausreichend hohen Unterdruck erzeugen können. Hier und im Folgenden werden unter dem Begriff Vakuumpumpe jegliche Mittel verstanden, welche einen solchen Unterdruck erzeugen können.

Erfindungsgemäss weist die Vorrichtung Verbindungsmittel auf, mittels welchen die Probegefässe einzeln oder in Gruppen gasdicht mit einem Anschluss der Vakuumpumpe verbindbar und dadurch evakuierbar sind. Diese Ausbildung der Verbindungsmittel weist mehrere Vorteile auf.

Erstens kann durch die gasdichte Verbindung der Probegefässe mit der Vakuumpumpe eine Vermischung der Proben über die Gasphase verhindert werden. Die Probegefässe sind im Prinzip geschlossen und kommunizieren direkt mit der Vakuumpumpe.

Zweitens sind das Rack und die Probegefässe direkt zugänglich sind. Da diese nicht in einem geschlossenen Raum angeordnet sind, ist es möglich, diese direkt zu heizen oder anzutreiben.

In einem besonders bevorzugten Ausführungsbeispiel weist die Vorrichtung Antriebsmittel zum Erzeugen einer Vortexbewegung auf (unter Vortexbewegung wird eine Bewegung verstanden, welche in den Probegefässen die erwünschten Wirbel erzeugt). Die Verbindungsmittel sind dabei gleichzeitig derart ausgebildet, dass die Haltemittel und die Probegefässe unabhängig von der Vakuumpumpe bewegbar sind. Insbesondere weisen die Verbindungsmittel flexible Komponenten auf.

In einem weiteren besonders einfachen Ausführungsbeispiel weisen die Verbindungsmittel wenigstens eine Verbindungsplatte auf. Die Verbindungsplatte ist dichtend auf die Einfüllöffnungen der Probegefässe aufpressbar. Weil in den Probegefässen Unterdruck herrscht, sind keine besonderen Vorkehrungen zum Aufpressen der Verbindungsplatte nötig. Die Verbindungsplatte wird dichtend angesaugt. Die Verbindungsplatte ist mit Verbindungswegen versehen, welche zum Verbinden der Einfüllöffnungen mit einem Anschluss der Vakuumpumpe dienen. Damit eine dichtende Verbindung gewährleistet ist, sind zwischen der Verbindungsplatte und den Einfüllöffnungen der Probegefässe vorteilhaft Dichtmittel angeordnet. Die Dichtmittel können auswechselbar sein. Kontaminierte Dichtungen können auf diese Weise einfach ausgetauscht werden.

Die Verbindungsplatte kann insbesondere Längskanäle aufweisen, welche sich von der den Probegefässen zuwendbaren Unterseite der Verbindungsplatte etwa rechtwinklig zur Unterseite erstrecken. Die Längskanäle sind fluchtend auf die Einfüllöffnungen aufsetzbar.

Die Längskanäle sind über die Verbindungswege mit dem Anschluss der Vakuumpumpe verbindbar. Durch einfaches Aufsetzen der Verbindungsplatte auf die Einfüllöffnungen der Probegefässe werden diese gasdicht mit der Vakuumpumpe verbunden. Eine Vermischung der Proben über die Gasphase ausserhalb der Probegefässe ist damit wirkungsvoll vermieden.

In einem besonders einfachem Ausführungsbeispiel erstrecken sich die Längskanäle quer durch die Verbindungsplatte, dass heisst bis an die der Unterseite der Verbindungsplatte abgewandte Oberseite. Die Verbindungswege in der Verbindungsplatte sind dabei durch Vertiefungen an der Oberseite gebildet. Die Vertiefungen kommunizieren mit den Längskanälen. Durch Verbindung der Längskanäle mit dem Anschluss der Vakuumpumpe kann eine gasdichte Verbindung zwischen Vakuumpumpe und den Probegefässen hergestellt werden. Vorteilhaft wird dabei das Niveau der Austrittsöffnung derart gewählt, dass es oberhalb des Niveau der Vertiefungen liegt. Auf diese Weise werden Schikanen gebildet, welche ein Rückfliessen von kondensierter Flüssigkeit in die Probegefässe vermeiden. Eine Cross-Contamination wird damit vermieden.

Die Verbindungsplatte kann eine mit den Sammelkanälen kommunizierende Anschlussöffnung aufweisen, welche mit dem Anschluss der Vakuumpumpe verbunden oder verbindbar ist. Die Verbindungsplatte dient also dazu, dem Anschluss der Vakuumpumpe mit den verschiedenen Probegefässen zu verbinden. Je nach Grösse und Anzahl der Probegefässe können unterschiedliche Haltevorrichtungen (d.h. Racks) und dazu passende Verbindungsplatten vorgesehen werden.

Eine besonders einfache Konstruktion ergibt sich, wenn die Sammelkanäle an der Oberseite der Verbindungsplatte angeordnet sind und nach oben offen sind. Die Abdichtung ergibt sich durch Aufsetzen einer Abdichtplatte. Zwischen der Abdichtplatte und der Verbindungsplatte kann ausserdem entlang deren Rand eine Dichtung eingesetzt sein.

Die Abdichtplatte ist vorzugsweise aus Glas gefertigt. Zum Vermeiden einer frühzeitigen Kondensation der Lösungsmittel an der Abdichtplatte kann diese oder auch die Verbindungsplatte beheizbar ausgebildet sein.

Die Abdichtplatte und/oder die Verbindungsplatte können ausserdem Ausrichtmittel zum Zentrieren und Festhalten der Verbindungsplatte bezogen auf die Haltemittel aufweisen.

Das vorstehend beschriebene Ausführungsbeispiel der Verbindungsmittel ist besonders bevorzugt. Der Anschluss der Vakuumpumpe kann beispielsweise über einen oder mehrere flexible Schläuche mit den Anschlussöffnungen an der oder den Verbindungsplatten verbunden sein.

Selbstverständlich sind auch andere Verbindungsmittel denkbar. Anstelle von an der Oberfläche der Verbindungsplatte angeordneten Vertiefungen können Bohrungen im Inneren einer Verbindungsplatte vorgesehen sein. In diesem Fall kann auf eine Abdichtplatte verzichtet werden.

Schliesslich ist es auch denkbar, jedes der Probegefässe direkt über einen Schlauch mit der Vakuumpumpe zu verbinden.

Vorteilhaft sind die Haltemittel und/oder die Verbindungsmittel einer unterschiedlichen Zahl und Grösse der Probegefässe anpassbar. Insbesondere können die Haltemittel und/oder die Verbindungsmittel je nach Grösse und Zahl der eingesetzten Probegefässe ausgetauscht werden.

In dem erfindungsgemässen Verfahren zum Bearbeiten, insbesondere zum Verdampfen von in Probegefässen gehaltenen Proben wird vorzugsweise eine Vorrichtung wie voranstehend beschrieben eingesetzt. Die Proben in den Probegefässen werden vorteilhaft erhitzt und die Probegefässe werden zum Erzeugen einer Vortexbewegung vorzugsweise gleichzeitig bewegt. Die Probegefässe werden einzeln oder in Gruppen evakuiert. Dabei wird der Druck ausserhalb der Probegefässe nicht verändert, verbleibt typischerweise auf Umgebungsdruck.

Die Erfindung wird im Folgenden in Ausführungsbeispielen und anhand der Zeichnungen näher erläutert. Es zeigen:
- Figur 1: eine schematische Darstellung einer erfindungsgemässen Vorrichtung,
- Figur 2: eine schematische Darstellung eines alternativen Ausführungsbeispiels mit einer reduzierten Anzahl an Probegefässen,
- Figur 3: eine perspektivische Darstellung der Verbindungsmittel und der Haltemittel in einer Explosionsdarstellung,
- Figur 4: eine perspektivische Darstellung der dichtend auf die Probegefässe ausgesetzte Verbindungsplatte,
- Figur 5: eine Draufsicht auf ein Ausführungsbeispiel einer Verbindungsplatte,
- Figur 6: einen Querschnitt durch die Verbindungsplatte gemäss Figur 5
- Figur 7: eine schematische Darstellung der gesamten Vorrichtung und
- Figur 8: eine schematische Darstellung der Antriebsvorrichtung.

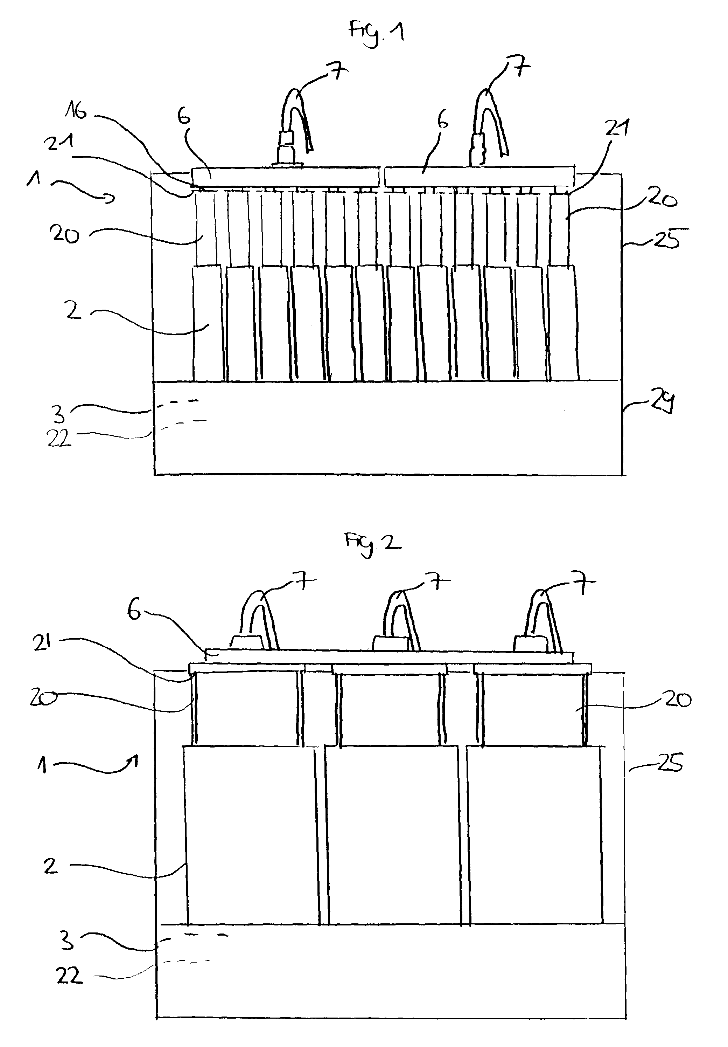

In Figur 1 sind die für die Erfindung wesentlichen Komponenten einer Vorrichtung 1 zum Verdampfen von Proben gezeigt. Die Vorrichtung 1 besteht im wesentlichen aus einem Gehäuse 29. In dem Gehäuse 29 sind Haltemittel in der Form eines Rack 2 vorgesehen. In das Rack 2 sind Probegefässe 20 einsetzbar. Das Rack 2 ist typischerweise aus Aluminium gefertigt. Die Probegefässe 20 bestehen typischerweise aus unten geschlossenen Glasröhrchen oder Kunststoffröhrchen.

Das Rack 2 ist auf eine Heizplatte 3 (in Figur 1 versteckt) gestellt, wodurch die in den Probegefässen 20 befindliche Probe erhitzt werden kann. Die Heizplatte ist über einen Motor 22 in Bewegung versetzbar, sodass in den Probegefässen eine Vortexbewegung der Probe erzeugt wird.

Zum Herabsetzen des Siedepunktes des Lösungsmittels der Probe wird im Innern der Probegefässe 20 ein Unterdruck erzeugt werden.

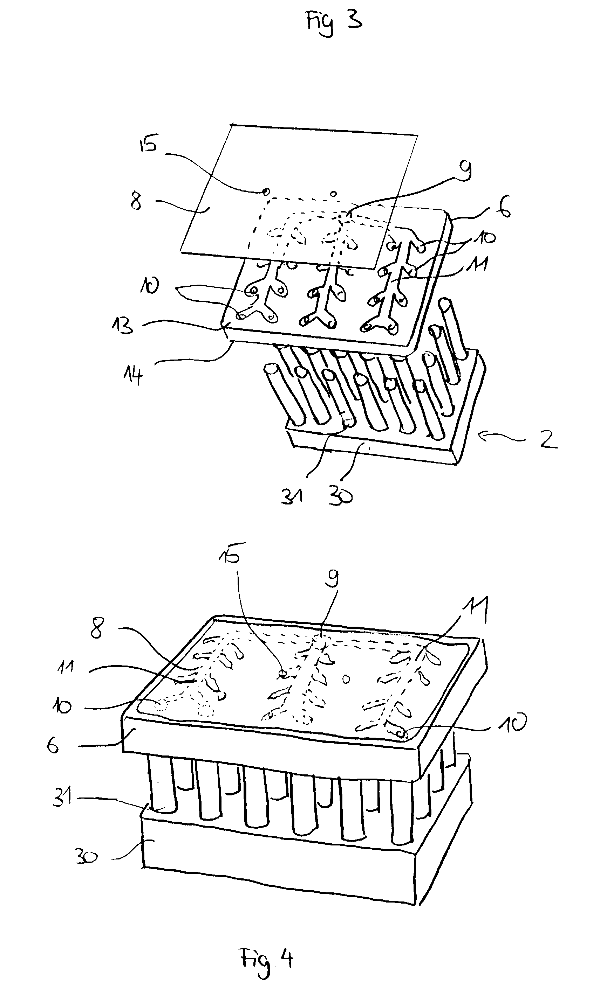

Dazu ist eine Verbindungsplatte 6 vorgesehen, welche dichtend auf die Einfüllöffnung 21 der Probegefässe 20 aufsetzbar ist. In der Verbindungsplatte 6 (siehe Figuren 3 und 4) sind Verbindungskanäle (Längskanäle 10, Vertiefung 11) vorgesehen. Über die Verbindungskanäle und einen flexiblen Schlauch 7 ist das Innere der Probegefässe 20 mit einer in Figur 1 nicht dargestellten Vakuumpumpe 4 verbunden oder verbindbar. Der Schlauch 7 wird zuerst in einen Kondensator geführt, wo das verdampfte Lösungsmittel kondensiert wird (in Figur 1 ebenfalls nicht gezeigt).

In Figur 1 ist ein Ausführungsbeispiel gezeigt, in welchem zwei Verbindungsplatten 6 vorgesehen sind. Das Rack dient zur Aufnahme von acht mal zwölf Probegefässen. Je eine Verbindungsplatte ist auf 48 Probegefässe 20 einsetzbar.

Die Vorrichtung 1 ist ausserdem mit einer schwenkbaren Haube 25 versehen, welche zum Schutz während dem Betrieb geschlossen werden kann.

Figur 2 zeigt die Vorrichtung 1, gemäss Figur 1 mit einem Rack 2 und einer Verbindungsplatte 6, welche einer kleineren Anzahl grösserer Probegefässe angepasst ist. In Figur 2 sind sechs Probegefässe 20 gezeigt. Die Probegefässe 20 sind mit der Vakuumpumpe dichtend über eine Verbindungsplatte 6 und beispielsweise über drei Verbindungsschläuche 7 verbunden.

Im Übrigen entspricht das Ausführungsbeispiel gemäss Figur 2 dem Beispiel gemäss Figur 1.

Figur 3 zeigt in einer Explosionsdarstellung schematisch das Rack 2 und die aus der Verbindungsplatte 6 und einer Abdichtplatte 8 bestehenden Verbindungsmittel.

Das Rack 2 ist aus einem Block 30 aus Aluminium geformt, in welchen zylindrische Löcher 31 zur Aufnahme der Probegefässe vorgesehen sind.

Auf die in die Löcher 31 eingesetzten Probegefässe 22 ist dichtend die Verbindungsplatte 6 aufsetzbar. Die Verbindungsplatte 6 ist mit Längskanälen 10 versehen, die sich von der den Probegefässen zuwendbaren Unterseite 14 durch die Verbindungsplatte 6 erstrecken. Die Anordnung und Zahl der Längskanäle 10 ist so gewählt, dass diese fluchtend auf die Einfüllöffnungen 21 der Probegefässe 21 aufsetzbar sind.

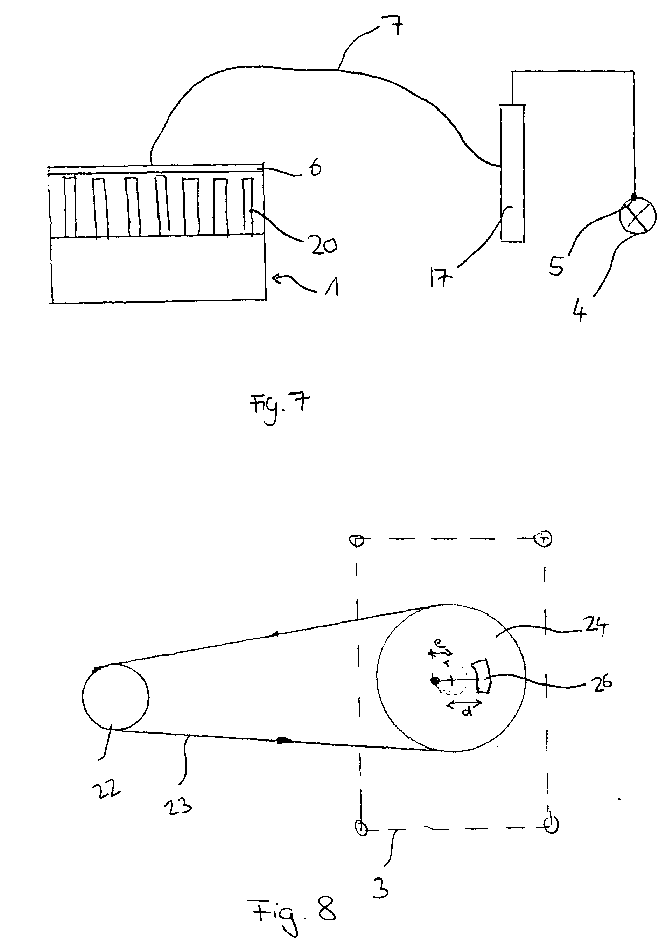

Auf der Oberseite 13 der Verbindungsplatte 6 sind Sammelkanäle in der Form von Vertiefungen 11 angeordnet. Die Vertiefungen 11 erstrecken sich von den Längskanälen 10 und verbinden diese miteinander und mit einer gestrichelt dargestellten Anschlussöffnung 9. Die Anschlussöffnung 9 ist mit der Vakuumpumpe 4 (siehe Darstellung in Figur 7) verbindbar.

Auf die Oberseite 13 der Verbindungsplatte 6 ist eine Abdichtplatte 8 dichtend aufsetzbar. Damit werden die Vertiefungen 11 nach oben hin abgedichtet und bilden Sammelkanäle.

Die Abdichtplatte 8 ist ausserdem mit Öffnungen 15 versehen, welche mit entsprechenden Öffnungen in der Verbindungsplatte 6 fluchten und welche zum Ausrichten und Befestigen der Abdichtplatte 8 und der Verbindungsplatte 6 in Bezug auf das Rack 2 dienen.

In Figur 4 ist die dichtend auf die Einfüllöffnungen 21 der Probegefässe 20 angesaugte Verbindungsplatte 6 gezeigt. Die Abdichtplatte 8 ist auf die Oberseite 13 der Verbindungsplatte 6 aufgelegt.

Die Abdichtplatte 8 ist ausserdem mit nicht dargestellten Heizmitteln, beispielsweise Heizdrähten oder einer aufgedampften Metallschicht, versehen, welche zum Vermeiden einer Kondensation der verdampften Lösungsmittel an der Innenseite der Abdichtplatte dient.

Die Verbindungsplatte 6 ist typischerweise aus beschichtetem Aluminium gefertigt. Die Abdichtplatte 8 besteht aus Glas.

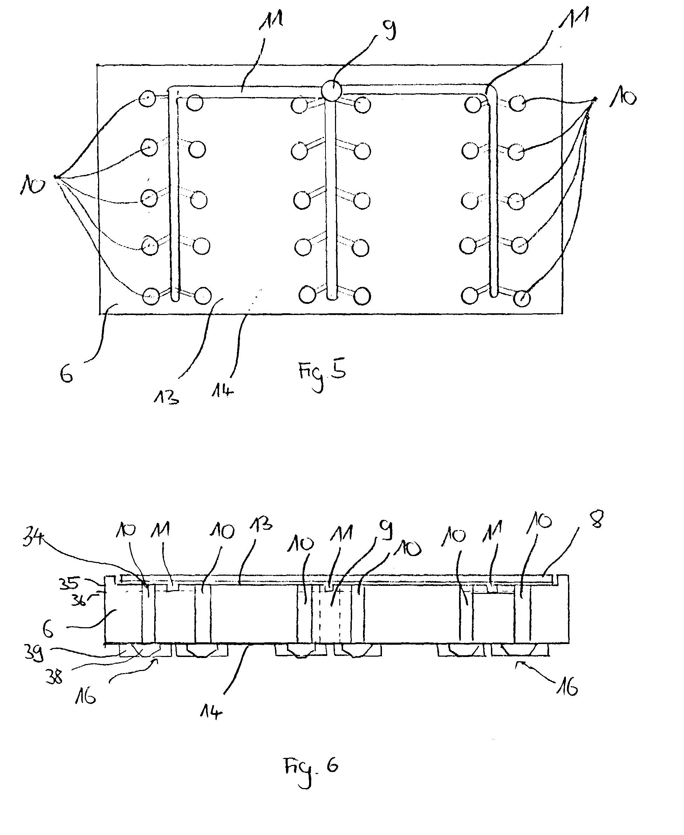

In Figur 5 ist eine Draufsicht auf die Verbindungsplatte 6 gezeigt. Die Längskanäle 10 erstrecken sich von der Unterseite 14 quer durch die Verbindungsplatte 6 bis an deren Oberseite 13. Vertiefungen 11 verbinden die Längskanäle 10 miteinander und mit der Anschlussöffnung 9.

In Figur 6 ist ein Querschnitt durch die Abdichtplatte 6 gezeigt. Auf der Unterseite 14 sind fluchtend als Verlängerung der Längskanäle 10 Dichtungsmittel 16 angeordnet, welche das dichtende Aufpressen der Abdichtplatte 6 auf die Einfüllöffnungen 21 der Probegefässe 20 erlauben.

Die Dichtungsmittel 16 sind typischerweise aus schaumstoffartigen Rondellen 39 oder Platten ausgeformt. Diese können einfach nach einem Arbeitsgang gewechselt werden, was die Kontaminationsgefahr über die Dichtungen eliminiert. Die Rondellen 39 oder Platten werden beispielsweise auf einen mit einer Bohrung versehenen Zapfen 38 aufgesetzt, der in die Längskanäle 10 eingeschraubt ist. Die Rondellen 39 oder die Platten können aus geschäumten Polyäthylen bestehen. Die Längskanäle 10 enden in einer Austrittsöffnung 34. Das Niveau 35 der Austrittsöffnung liegt oberhalb des Niveau 36 des Bodens der Vertiefung 11. Dank der auf diese Weise gebildeten Schikane wird der Rückfluss von Kondansat vermieden. Es wäre aber auch denkbar, andere Formen von Schikanen, z.B. einen vorstehenden Wulst vorzusehen.

In Figur 7 ist schematisch die gesamte Vorrichtung 1, welche aus dem Gehäuse 29, einem Kondensator 17 und einer Vakuumpumpe 4 besteht gezeigt. Die Verbindungsplatte 6 ist über einen Schlauch 7 mit einem Kondensator 17 verbunden. In dem Kondensator 17 wird das verdampfte Lösungsmittel kondensiert und in einem Auffangkolben gesammelt. Der Kondensator 17 ist mit einem Anschluss 5 einer Vakuumpumpe 4 verbunden.

Figur 8 zeigt schematisch den Antrieb des Racks, der im wesentlichen aus einem Motor 22 besteht, welcher über einen Riemen einen Exzenter 24 antreibt. Der Exzenter bewegt die Heizplatte 3, auf welche das Rack 2 gestellt ist.

Der Exzenter 24 ist ausserdem einfach einstellbar, sodass die Exzentrizität e und damit der Grad der Exzenterbewegung, d.h. die Grösse der erzeugten Wirbel einstellbar ist. Ebenfalls kann auch ein Auswuchtgewicht 26 vorgesehen werden. Das Auswuchtgewicht 26 kann einstellbar sein, um einen optimalen vibrationsarmen Betrieb zu ermöglichen. Einstellbarkeit kann zum Beispiel dadurch erzeugt werden, dass der Abstand des Auswuchtgewichtes von der Dehachse, z.B. über ein Gewinde, verstellbar ist.

## Patentansprüche

1. Vorrichtung (1) zum Bearbeiten, insbesondere Verdampfen von Proben in mit wenigstens einer Einfüllöffnung (21) versehenen Probegefässen (20),
mit Haltemitteln (2) zum Halten mehrerer Probegefässe (20),
mit optionalen Heizmitteln (3) zum Erwärmen der in den Probegefässen (20) enthaltenen Proben
und mit Mitteln (4) zum Erzeugen eines Unterducks,
dadurch gekennzeichnet, dass die Vorrichtung (1) Verbindungsmittel (6, 7, 8) aufweist, mittels welchen die Probegefässe (20) einzeln oder in Gruppen gasdicht mit einem Anschluss (5) der Mittel (4) zum Erzeugen des Unterdrucks verbindbar und dadurch evakuierbar sind.

2. Vorrichtung nach Anspruch 1, dadurch gekennzeichnet, dass die Vorrichtung (1) Antriebsmittel (22, 23, 24) zum Erzeugen einer Vortex-Bewegung aufweist, und dass die Verbindungsmittel (6, 7, 8) derart ausgebildet sind, dass die Haltemittel (2) und die Probegefässe (20) unabhängig von den Mitteln (4) zum Erzeugen eines Unterdurcks bewegbar sind, dass insbesondere die Verbindungsmittel (6, 7, 8) flexible Komponente (7) aufweisen.

3. Vorrichtung nach einem der Ansprüche 1 oder 2, dadurch gekennzeichnet, dass die Verbindungsmittel wenigstens eine Verbindungsplatte (6) aufweisen, welche auf die Einfüllöffnungen (21) der Probegefässe (20) dichtend aufpressbar ist, respektive durch das Vakuum angesaugt wird,
und welche mit Verbindungswegen (10, 11) zum Verbinden der Einfüllöffnungen (21) mit dem Anschluss (5) der Mittel zum Erzeugen eines Unterdrucks versehen ist.

4. Vorrichtung nach Anspruch 3, dadurch gekennzeichnet, dass die Verbindungsplatte (6) Längskanäle (10) aufweist, welche sich von der den Probegefässen (20) zuwendbaren Unterseite (14) der Verbindungsplatte (6) erstrecken und welche fluchtend auf die Einfüllöffnungen (21) aufsetzbar sind.

5. Vorrichtung nach Anspruch 4, dadurch gekennzeichnet, dass die Längskanäle (10) sich durch die Verbindungsplatte (5) bis an die der Unterseite (14) abgewandte Oberseite (13) erstrecken, wobei die Oberseite mit wenigstens einer Vertiefung (11) versehen ist, welche mit den Längskanälen (10) kommuniziert.

6. Vorrichtung nach Anspruch 5, dadurch gekennzeichnet, dass zwischen der Austrittsöffnng (34) der Längkanäle (10) und der Vertiefung (11) Schikanen gebildet sind, die das Rückfliessen von Kondensat in die Probegefässe (20) verhindern, dass insbesondere dass Niveau der Austrittsöffnung oberhalb des Niveau des Bodens der Vertiefung (11) liegt.

7. Vorrichtung nach Anspruch 6, dadurch gekennzeichnet, dass die Verbindungsplatte (6) eine mit der Vertiefung (11) kommunizierende Anschlussöffnung (9) aufweist, welche mit dem Anschluss (5) verbindbar oder verbunden ist.

8. Vorrichtung nach einem der Ansprüche 6 oder 7, dadurch gekennzeichnet, dass die Verbindungsmittel eine Abdichtplatte (8) aufweisen, welche zum Abdichten der Vertiefung (11) auf die Verbindungsplatte (6) aufsetzbar ist.

9. Vorrichtung nach Anspruch 8, dadurch gekennzeichnet, dass die Abdichtplatte (8) beheizbar ausgebildet ist, und dass die Abdichtplatte (8) aus einem transparenten Material, insbesondere aus Glas gefertigt ist.

10. Vorrichtung nach einem der Ansprüche 8 oder 9, dadurch gekennzeichnet, dass die Abdichtplatte (8) und/oder die Verbindungsplatte (6) Ausrichtmittel (15) zum Zentrieren und Festhalten der Verbinungsplatte (6) bezogen auf die Haltemittel (2) aufweisen.

11. Vorrichtung nach einem der Ansprüche 1 bis 10, dadurch gekennzeichnet, dass die Haltemittel (2) und/oder die Verbindungsmittel (6, 7, 8) einer unterschiedlichen Zahl und Grösse der Probegefässe (20) anpassbar sind, insbesondere austauschbar sind.

12. Verfahren zum Bearbeiten, insbesondere zum Verdampfen von in mehreren Probegefässen (20) gehaltenen Proben, insbesondere mit einer Vorrichtung (1) nach einem der Ansprüche 1 bis 11,
in welchem Verfahren die Proben in den Probegefässen (20) erhitzt werden und in welchen die Probegefässe (20) vorzugsweise bewegt werden, dadurch gekennzeichnet, das die Probegefässe (20) einzeln oder in Gruppen mit Mitteln zum Erzeugen eines Unterdrucks verbunden und dabei evakuiert werden.
